**Europäisches Patentamt**

**European Patent Office**

**Office européen des brevets**

(19)

(11) Veröffentlichungsnummer : **0 130 588**
**B1**

# EUROPÄISCHE PATENTSCHRIFT

(12)

(45) Veröffentlichungstag der Patentschrift :
01.10.86

(21) Anmeldenummer : **84107520.3**

(22) Anmeldetag : **28.06.84**

(51) Int. Cl.⁴ : **H 04 N   9/44, H 04 N   5/04**

(54) Verfahren und Einrichtung zur Anpassung der Bilddatenwortrate eines PAL-Decodierers/Codierers an die Verarbeitungstaktfrequenz einer Video-Verarbeitungseinrichtung.

(30) Priorität : 30.06.83 DE 3323619

(43) Veröffentlichungstag der Anmeldung :
09.01.85 Patentblatt 85/02

(45) Bekanntmachung des Hinweises auf die Patenterteilung : 01.10.86 Patentblatt 86/40

(84) Benannte Vertragsstaaten :
AT CH DE IT LI NL

(56) Entgegenhaltungen :
DE-A- 3 041 898

(73) Patentinhaber : **Siemens Aktiengesellschaft Berlin und München**
**Wittelsbacherplatz 2**
**D-8000 München 2 (DE)**

(72) Erfinder : **Starck, Alexander, Dipl.-Phys.**
**Terhallestrasse 45**
**D-8000 München 90 (DE)**

## Beschreibung

Die Erfindung betrifft ein Verfahren zur Anpassung der Bilddatenwortrate eines PAL-Decodierers mit vorgegebener PAL-Taktfrequenz an die Video-Taktfrequenz einer Video-Verarbeitungs- oder Video-Übertragungseinrichtung.

Es ist geplant, digital arbeitende PAL-Decodierer und PAL-Codierer zu verwenden. Das analoge PAL-Fernsehsignal wird in der Regel mit einem ganzzahligen Vielfachen der Farbträgerfrequenz, üblicherweise mit der vierfachen Farbträgerfrequenz, abgetastet und digitalisiert. Ein digitaler PAL-Decodierer gibt an seinem Ausgang mit der PAL-Taktfrequenz von 17,734 075 MHz die Datenworte für rot, grün und blau oder für ein Luminanzsignal und zwei Chrominanzsignale ab. Vielfach ist es üblich, für die Chrominanzsignale eine geringere Datenwortrate zu wählen.

Für die digitale Verarbeitung von Videosignalen im Studio ist eine Video-Taktfrequenz von 13,5 MHz genormt. Für die Übertragung von Videosignalen strebt man ebenfalls diese Taktfrequenz oder eine leicht daraus abzuleitende Taktfrequenz an, zum Beispiel 9 MHz (13,5 · 2/3 MHz), 10,125 MHz (13,5 · 3/4 MHz) oder 11,25 MHz (13,5 · 5/6 MHz). Diese Frequenzen sind aus der Arbeitstaktfrequenz des PAL-Decodierers beziehungsweise PAL-Codierers nicht abzuleiten.

Zwar ist eine direkte Umsetzung der Ausgangssignale des digitalen PAL-Codierers durch digitale Filter prinzipiell möglich, der Aufwand ist aber beträchtlich. Einfacher ist die Anpassung der Arbeitstaktfrequenzen, wenn der Umweg über die Umwandlung der digitalen Ausgangssignale des PAL-Decodierers in analoge Signale beschritten wird ; dabei tritt aber ein zusätzliches Quantisierungsrauschen auf.

Aufgabe der Erfindung ist es, ein einfach realisierbares Verfahren zur Anpassung der Datenwortrate eines PAL-Decodierers/Codierers an die Video-Taktfrequenz einer Video-Verarbeitungseinrichtung oder Videoübertragungseinrichtung anzugeben.

Diese Aufgabe wird dadurch gelöst, daß die vom PAL-Decodierer abgegebenen Bilddatenwörter in einen Zwischenspeicher mit der PAL-Taktfrequenz eingeschrieben werden, daß die Bilddatenwörter mit einer gegenüber der PAL-Taktfrequenz höheren Speichertaktfrequenz, die aus der Video-Taktfrequenz leicht ableitbar ist, verzögert ausgelesen werden und daß die Einschreib- und Auslesevorgänge durch die Horizontalimpulse des PAL-Decodierers synchronisiert werden.

Vorteilhaft bei diesem Verfahren ist es, daß die bisherigen PAL-Decodierer weiterverwendet werden können. Die Geschwindigkeitsanpassung erfolgt über den Zwischenspeicher in den die Datenworte mit der PAL-Taktfrequenz eingeschrieben werden und mit einer nur minimal von dieser Taktfrequenz abweichenden Speichertaktfrequenz ausgelesen werden. Hierdurch erfolgt eine geringe geometrische Verzerrung der Fernsehbilder, die aber praktisch nicht wahrgenommen wird.

Die Aufgabe wird bei der Anpassung der Bilddatenwortraten von Video-Verarbeitungs-/Übertragungseinrichtungen an die PAL-Taktfrequenz dadurch gelöst, daß die von die von der Video-Verarbeitungs- oder Video-Übertragungseinrichtung abgegebenen Bilddatenwörter gegebenenfalls nach Umsetzung der Bilddatenwortrate mit der Speichertaktfrequenz in den Zwischenspeicher eingeschrieben werden, daß die Bilddatenwörter mit einer gegenüber der Speichertaktfrequenz niedrigeren PAL-Taktfrequenz ausgelesen werden und daß die Einschreib- und Auslesevorgänge durch die Horizontalimpulse der Video-Verarbeitungs- oder Video-Übertragungseinrichtung synchronisiert werden.

Das zunächst beschriebene Verfahren wird gewissermaßen umgekehrt. Aus dem Zwischenspeicher werden die mit der Speichertaktfrequenz eingelesenen Bilddatenwörter mit der PAL-Arbeitstaktfrequenz ausgelesen und in dem PAL-Codierer weiterverarbeitet. In beiden Fällen muß der Zwischenspeicher nur wenige Bilddatenwörter aufnehmen. Die Synchronisierung der Einschreib- und Auslesevorgänge erfolgt bei jedem Zeilenneubeginn durch einen Horizontalimpuls.

Es ist zweckmäßig, daß die Anpassung der Bilddatenwortrate der Video-Verarbeitungs- oder Video-Übertragungseinrichtung an die Speichertaktfrequenz durch Überabtastung der vom Zwischenspeicher oder der Video-Verarbeitungs-/Video-Übertragungseinrichtung abgegebene Bilddatenwörter und anschließender digitaler Filterung sowie Unterabtastung erfolgt.

Im allgemeinen stimmt die Speichertaktfrequenz nicht mit der Video-Taktfrequenz überein. Es kann jedoch nach bekannten Methoden eine einfache Anpassung der Datenwortraten bzw. der Arbeitstaktfrequenzen vorgenommen werden, da diese leicht voneinander abzuleiten sind. Die Anpassung geschieht prinzipiell durch Überabtastung, d. h. Einfügen von Datenwörtern mit dem Wert Null, digitaler Filterung und anschließender Unterabtastung. Bei einfacher Verdoppelung der Taktfrequenz kann die Unterabtastung natürlich entfallen.

Bei der Realisierung des Verfahrens ist es zweckmäßig, daß ein Zwischenspeicher vorgesehen ist, daß eine erste Speichersteuerung vorgesehen ist, der die PAL-Taktfrequenz zugeführt ist, daß eine zweite Speichersteuerung vorgesehen ist, der die Speichertaktfrequenz zugeführt ist, daß ein Phasenregelkreis vorgesehen ist und daß den Speichersteuerungen und dem Phasenregelkreis die Horizontalimpulse zugeführt sind.

Die Speichersteuerung ist in eine erste und in eine zweite Speichersteuerung aufgeteilt. Die erste Speichersteuerung arbeitet mit der PAL-Taktfrequenz und die zweite Speichersteuerung mit der Video-Taktfrequenz. Ist die Anordnung an den Ausgang eines PAL-Decodierers angeschaltet, so wird mit dem PAL-Arbeitstakt in den Zwischenspeicher eingeschrieben und mit dem Speichertakt ausgeschrieben. Da der Speichertakt eine höhere Frequenz aufweist, müssen bei jeder Fernsehzeile zunächst einige Bilddatenwörter in den Zwischenspeicher eingeschrieben werden, bevor das erste Bilddatenwort ausgelesen wird.

Die erforderliche Zeitverschiebung wird durch die zweite Speichersteuerung erreicht.

Ist die Anordnung dagegen an den Ausgang einer Video-Verarbeitungseinrichtung angeschaltet, so werden die schneller eingeschriebenen Bilddatenwörter sofort ausgelesen, nach Beendigung des Einschreibvorganges für eine Zeile sind noch mehrere Bilddatenwörter eingespeichert, die anschließend ausgelesen werden. Die richtige Zuordnung der Horizontalimpulse zu den ausgelesenen Bildsignalwörtern wird entweder durch einen vom Phasenregelkreis erzeugten Horizontalimpuls erreicht oder durch eine zeitliche Verschiebung des gelieferten Horizontalimpulses gewonnen.

Weitere vorteilhafte Ausbildungen der Erfindung sind in den übrigen Unteransprüchen angegeben.

Die Erfindung wird anhand einer Prinzipschaltung näher erläutert.

Es zeigen
Figur 1 ein übliches Fernsehbild,
Figur 2 ein durch das erfindungsgemäße Verfahren erzeugtes Fernsehbild und
Figur 3 eine Anordnung zur Realisierung des Verfahrens.

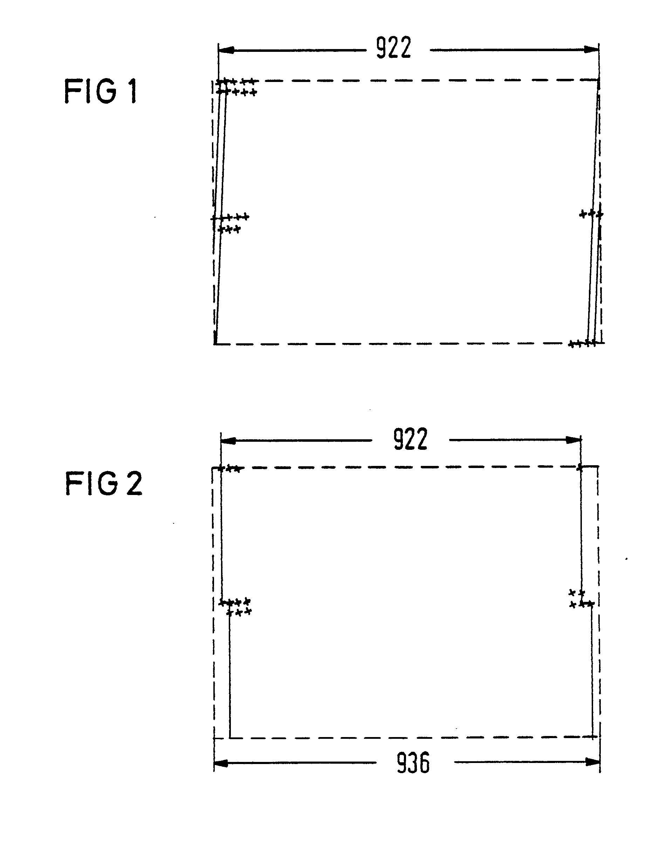

In Fig. 1 ist der Aufbau eines Fernsehbildes schematisch dargestellt. Betrachtet man die räumliche Lage der Abtastpunkte im Fernsehbild bei Abtastung mit der vierfachen Farbhilfsträgerfrequenz, so sieht man, daß in jeder Zeile etwa 1 135 Abtastpunkte liegen. Von diesen liegen jedoch nur 922 im aktiven Teil der Zeile, der der Bilddarstellung dient. Beim PAL-Verfahren liegen die Bildpunkte aufeinanderfolgender Zeilen nicht exakt untereinander sondern leicht schräg, weil die Abtastfrequenz kein vielfaches der Zeilenfrequenz ist, sondern um 100 Hz höher ist als die 1 135fache Zeilenfrequenz. Der entsprechende Bildpunkt einer folgenden Zeile wäre jeweils etwas früher geschrieben, so daß sich eine leichte Neigung der Spalten von rechts oben nach links unten ergibt. Die Verschiebung zwischen den Bildpunkten der ersten und der letzten Zeile eines Halbbildes entspricht dem Abstand zweier Bildpunkte. Sobald die Verschiebung einen Bildpunkt erreicht, wird eine neue Spalte am Ende jeder Zeile hinzugefügt bzw. am Anfang jeder Zeile weggenommen. Die Bilddatenwortrate beträgt rund 17,73 MHz.

Zur Anpassung an die Video-Taktfrequenz der Verarbeitungs- bzw. Übertragungseinrichtungen wird das Fernsehbild entsprechend Fig. 2 verändert. Die Arbeitstaktrate wird auf 18 MHz erhöht, die entsprechenden Bildpunkte exakt untereinandergeschrieben und das Bildformat in horizontaler Richtung um etwa 1,4 Prozent komprimiert, so daß jetzt im aktiven Teil jeder Zeile 936 Bildpunkte stehen. Die Bildpunkte links und rechts des eigentlichen Bildes können beispielsweise einen Grauwert enthalten. Gewöhnlich werden diese Bildpunkte nicht übertragen werden, was dem Signalwert schwarz entspricht. Dann ist es nur erforderlich, die 922 Bildpunkte des aktiven Teils der Zeile mit der erhöhten Video-Arbeitstaktfrequenz von 18 MHz auszulesen. Die geringfügige Komprimierung in der horizontalen Richtung stört im allgemeinen nicht; ebenso ist die leichte Schräglage des Bildes unkritisch.

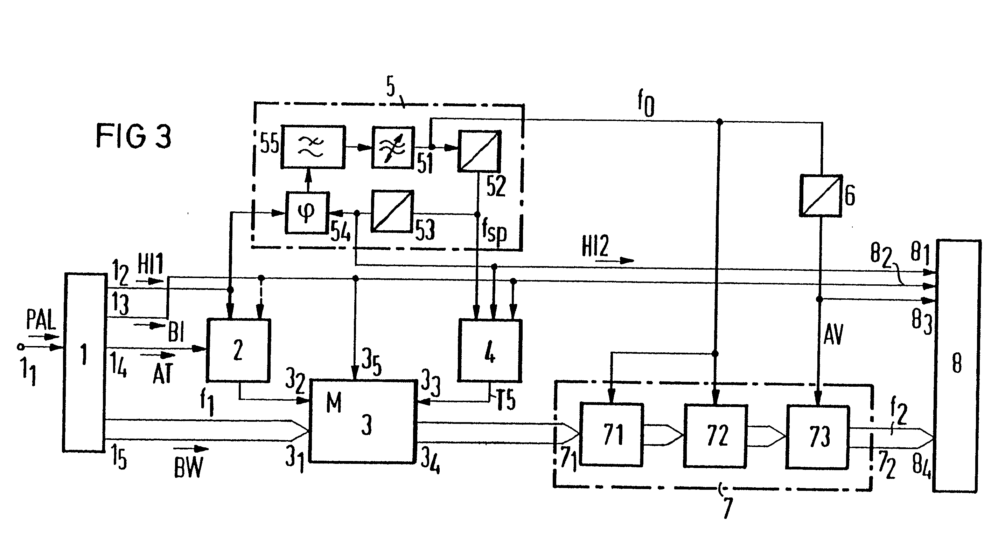

In Fig. 3 ist das Prinzipschaltbild einer Anordnung zum Anschluß einer Video-Verarbeitungs- oder Übertragungseinrichtung an einen PAL-Decodierer dargestellt. Dem PAL-Decodierer 1 wird über seinen Eingang $1_1$ ein analoges PAL-Signal zugeführt. An einem Ausgang $1_5$ werden von dem PAL-Decodierer 1 Bilddatenwörter, zum Beispiel ein Luminanzsignal und zwei Chrominanzsignale, abgegeben. Der PAL-Decodierer weist außerdem drei Taktausgänge $1_2$ bis $1_4$ auf, an denen Zeilenimpulse, Bildimpulse und ein PAL-Arbeitstakt mit einer Frequenz von rund 17,73 MHz abgegeben werden. Der Taktausgang $1_2$ ist mit einer ersten Speichersteuerung 2 verbunden, ebenso der dritte Taktausgang $1_4$. Der Ausgang der Speichersteuerung greift über einen Schreibeingang $3_2$ in einen Zwischenspeicher 3 ein, dessen Dateneingang $3_1$ mit dem Datenausgang $1_5$ des PAL-Decodierers verbunden ist. In Fig. 3 wird als Zwischenspeicher ein First-in/first-out-Speicher, meist als FIFO bezeichnet, verwendet. Der Rücksetzeingang $3_5$ des FIFO ist mit dem zweiten Taktausgang $1_3$ verbunden. Die Anordnung enthält einen Phasenregelkreis 5 mit einem Oszillator 51, einem ersten Frequenzteiler 52, dessen Ausgang mit einer zweiten Speichersteuerung 4 verbunden ist, die einen Speicherarbeitstakt mit einer Speicherarbeitstaktfrequenz $f_{sp}$ von 18 MHz erhält. Der Ausgang des ersten Frequenzteilers 52 ist an den Ausgang eines zweiten Frequenzteilers 53 angeschlossen, dessen Ausgang an einen Eingang einer Phasenvergleichsschaltung 54 angeschlossen ist. Am Ausgang des zweiten Frequenzteilers der mit einem ersten Eingang $8_1$ einer Video-Verarbeitungseinrichtung 8 verbunden ist, werden Horizontalimpulse abgegeben. Der zweite Eingang der Phasenvergleichsschaltung 52 ist an den ersten Taktausgang $1_2$ des PAL-Decodierers 1 angeschaltet. Über einen Tiefpaß 55 wird der Oszillator 51 des Phasenregelkreises gesteuert. Das Teilungsverhältnis des zweiten Frequenzteilers beträgt 1 152; das Teilungsverhältnis des ersten Frequenzteilers 52 richtet sich nach der Oszillatorfrequenz. In die zweite Speichersteuerung 4 greift auch noch der im Phasenregelkreis erzeugte Horizontalimpuls HI2 ein. Unter Umständen ist es notwendig, daß die Bildimpulse BI in die Speichersteuerungen eingreifen. Der Ausgang der zweiten Speichersteuerung 4 ist mit dem Arbeitstakteingang $3_3$ des Zwischenspeichers

verbunden. Der von der zweiten Speichersteuerungen abgegebene Speicherarbeitstakt ist mit T5 bezeichnet. An den Datenausgang $3_4$ des Zwischenspeichers ist eine Taktanpassungsschaltung 7 angeschlossen, die eine Anordnung zur Überabtastung 71, ein digitales Filter 72 und eine Anordnung zur Unterabtastung 73 enthält. Der Taktanpassungsschaltung 7 wird die Oszillatorfrequenz $f_0$ sowie über einen dritten Frequenzteiler 6 ein Videoarbeitstakt AV mit der Video-Taktfrequenz $f_2$ zugeführt. Der Videoarbeitstakt ist über einen dritten Takteingang $8_3$ an die Video-Verarbeitungseinrichtung 8 angeschaltet, an den zweiten Takteingang $8_2$ ist der zweite Taktausgang $1_3$ des PAL-Decodierers angeschaltet. Die Dateneingänge und Datenausgänge der Taktanpassungsschaltung 7 sind mit $7_1$ bzw. $7_2$ bezeichnet. Der Dateneingang der Video-Verarbeitungseinrichtung ist an den Datenausgang der Taktanpassungsschaltung 7 angeschlossen und mit $8_4$ bezeichnet.

Bei einer Video-Taktfrequenz von 9 MHz wird beispielsweise eine Oszillatorfrequenz $f_0$ von 18 MHz gewählt, die Teilungsverhältnisse des ersten Frequenzteilers 52 und des dritten Frequenzteilers 6 betragen dann 1 : 1 bzw. 2 : 1. Für eine Videotaktfrequenz von 13,5 MHz wird beispielsweise eine Oszillatorfrequenz von 54 MHz gewählt, die Teilungsverhältnisse des ersten Frequenzteilers 52 und des dritten Frequenzteilers 6 sind dann 3 : 1 bzw. 4 : 1. Für die Videotaktfrequenzen von 10,125 und 11,125 werden Oszillatorfrequenzen von 162 MHz bzw. 90 MHz gewählt.

Die in Fig. 3 prinzipiell dargestellte Anordnung dient dem Anschluß der Video-Verarbeitungs- oder Video-Übertragungseinrichtung 8 an den PAL-Decodierer 1. Am Eingang $1_1$ des PAL-Decodierers liegt das analoge PAL-Fernsehsignal PAL an. Im PAL-Decodierer wird ein digitales Video-Signal erzeugt. Die einzelnen Bildpunkten zugeordneten Bilddatenwörter BW werden an dem Datenausgang $1_5$ abgegeben. Die Bilddatenwörter BW enthalten beispielsweise ein Luminanzsignal, das mit einer Datenwortrate von 17,73 MHz ausgegeben wird und zwei Chrominanzsignale, die zusammen wieder mit derselben Datenwortrate ausgegeben werden. An den zwei Taktausgängen $1_2$ und $1_3$ werden die benötigten Synchronimpulse abgegeben. Ein Datenworttakt AT wird an dem dritten Taktausgang $1_4$ zum Einschreiben der Bilddatenwörter in den Zwischenspeicher 3 ausgegeben. Die Bilddatenwörter werden mit dem Worttakt AT eingeschrieben. Die erste Speichersteuerung 2 sorgt dafür, daß der Einschreibevorgang richtig abläuft. Die Spaltensprünge in der Mitte eines Fernsehbildes müssen hierbei berücksichtigt werden. Hierzu kann der am zweiten Taktausgang $1_3$ abgegebene Bildimpuls BI zur Synchronisation mitverwendet werden. Ansonsten wird der Einspeichervorgang von einem am Anfang jeder Fernsehzeile auftretenden Horizontalimpuls synchronisiert. Dieser bildet auch das Referenzsignal für den Phasenregelkreis 5. Über dessen Oszillator 51 und den ersten Frequenzteiler 52 wird ein Speichertakt TS von 18 MHz erzeugt, mit dem die Bildatenwörter ausgelesen werden. Da der Speichertakt TS eine höhere Frequenz als die PAL-Arbeitstakte aufweist, muß der Auslesevorgang verzögert werden. So müssen zunächst mehrere Bilddatenwörter (jeweils 7 Luminanzdatenwörter und Chrominanzdatenwörter) eingelesen werden, bevor das erste Bilddatenwort ausgelesen wird. Die zweite Speichersteuerung 4 sorgt für das zeitgerechte Auslesen. Sie wird ebenfalls von einem Horizontalimpuls synchronisiert, hier wird der im Phasenregelkreis erzeugte und von dem zweiten Frequenzteiler 53 abgegebene zweite Horizontalimpuls HI2 verwendet. Wenn keine Ergänzung der ausgelesenen Fernsehzeilen durch mehrere Grau enthaltene Bildpunkte am Anfang und am Ende jeder Fernsehzeile vorgenommen wird, werden jeweils 922 Bilddatenworte eingelesen und wieder ausgelesen.

Unabhängig von der benötigten Video-Taktfrequenz $f_2$ erfolgt der Auslesevorgang stets mit 18 MHz. Wird eine andere Video-Taktfrequenz $f_2$ benötigt, so erfolgt die Umsetzung der ausgelesenen Bilddatenwortrate in der Taktanpassungsschaltung 7. In der Anordnung zur Überabtastung 71 wird zunächst ein Datensignal mit höherer Wortrate durch Einfügen von Nullen zwischen die ausgelesenen Bilddatenwörter erzeugt. Nach dem digitalen Filter 72 erfolgt eine Unterabtastung, d. h., es wird beispielsweise nur jeder zweite Signalwert ausgegeben. Diese Umsetzervorgänge sind aus der digitalen Filtertechnik hinreichend bekannt und sollen hier nicht näher beschrieben werden. Selbstverständlich werden auch die am zweiten Taktausgang $1_3$ ausgegebenen Bildimpulse BI an die Video-Verarbeitungs- oder Video-Übertragungseinrichtung weitergegeben. Wenn der Datenfluß in umgekehrter Richtung, also von der Video-Verarbeitungs- oder Video-Übertragungseinrichtung zum PAL-Codierer vor sich geht, müssen bei der Taktanpassung 7 und dem Zwischenspeicher 3 nur die Eingänge mit den Ausgängen vertauscht werden. Ebenso dienen jetzt die Horizontalimpulse HI2 als Referenzsignal für den Phasenregelkreis 5, der jetzt eine Speichertaktfrequenz $f_{sp}$ von rund 17,73 MHz zum Auslesen des Zwischenspeichers erzeugt. Am Ausgang des PAL-Codierers wird ein analoges PAL-Signal abgegeben.

**Patentansprüche**

1. Verfahren zur Anpassung der Bilddatenwortrate eines PAL-Decodierers (1) mit vorgegebener PAL-Taktfrequenz ($f_1$) an die Video-Taktfrequenz ($f_2$) einer Video-Verarbeitungs- oder Video-Übertragunseinrichtung (8), dadurch gekennzeichnet, daß die vom PAL-Decodierer (1) abgegebenen Bilddatenwörter (BW) in einen Zwischenspeicher (3) mit der PAL-Taktfrequenz ($f_1$) eingeschrieben werden, daß die Bilddatenwörter (BW) mit einer gegenüber der PAL-Taktfrequenz ($f_1$) höheren Speichertaktfrequenz ($f_{sp}$), die aus der Video-

Taktfrequenz ($f_2$) leicht ableitbar ist, verzögert ausgelesen werden und daß die Einschreib- und Auslesevorgänge durch die Horizontalimpulse (HI1) des PAL-Decodierers (1) synchronisiert werden (Fig. 3).

2. Verfahren zur Anpassung der Video-Taktfrequenz ($f_2$) der Video-Verarbeitungs- oder Video-Übertragungseinrichtung (8) an die PAL-Taktfrequenz eines PAL-Codierers, dadurch gekennzeichnet, daß die von die von der Video-Verarbeitungs- oder Video-Übertragungseinrichtung (8) abgegebenen Bilddatenwörter gegebenenfalls nach Umsetzung der Bilddatenwortrate ($f_2$) mit der Speichertaktfrequenz ($f_{sp}$) in den Zwischenspeicher (3) eingeschrieben werden, daß die Bilddatenwörter mit einer gegenüber der Speichertaktfrequenz ($f_{sp}$) niedrigeren PAL-Taktfrequenz ($f_1$) ausgelesen werden und daß die Einschreib- und Auslesevorgänge durch die Horizontalimpulse der Video-Verarbeitungs- oder Video-Übertragungseinrichtung (8) synchronisiert werden.

3. Verfahren nach Anspruch 1 oder 2, dadurch gekennzeichnet, daß die Anpassung der Bilddatenwortrate ($f_2$) der Video-Verarbeitungs- oder Video-Übertragungseinrichtung (8) an die Speichertaktfrequenz ($f_{sp}$) durch Überabtastung der vom Zwischenspeicher (3) oder der Video-Verarbeitungs-/Video-Übertragungseinrichtung (8) abgegebenen Bilddatenwörter und anschließender digitaler Filterung sowie Unterabtastung erfolgt.

4. Anordnung zur Realisierung des Verfahrens nach einem der vorhergehenden Ansprüche, dadurch gekennzeichnet, daß ein Zwischenspeicher (3) vorgesehen ist, daß eine erste Speichersteuerung (2) vorgesehen ist, der die PAL-Taktfrequenz ($f_1$) zugeführt ist, daß eine zweite Speichersteuerung (4) vorgesehen ist, der die Speichertaktfrequenz ($f_{sp}$) zugeführt ist, daß ein Phasenregelkreis (5) vorgesehen ist, und daß den Speichersteuerungen (2, 4) und dem Phasenregelkreis (5) die Horizontalimpulse zugeführt sind.

5. Anordnung nach Anspruch 4, dadurch gekennzeichnet, daß bei Anschaltung der Video-Verarbeitungs- oder Video-Übertragungseinrichtung (8) an den Ausgang des PAL-Decodierers (1) an den Datenausgang ($3_4$) des Zwischenspeichers (3) eine Taktanpassungsschaltung (7) angeschaltet ist, die eine Anordnung zur Überabtastung (71), ein digitales Filter (72) und eine Anordnung zur Unterabtastung (73) enthält und daß bei einer Anschaltung des PAL-Codierers an den Ausgang der Video-Verarbeitungs- oder Video-Übertragungseinrichtung (8) die Taktanpassungsschaltung (7) dem Dateneingang des Zwischenspeichers (3) vorgeschaltet ist.

6. Anordnung nach Anspruch 4 oder 5, dadurch gekennzeichnet, daß als Speicher ein FIFO-Speicher vorgesehen ist.

7. Anordnung nach einem der Ansprüche 5 bis 7, dadurch gekennzeichnet, daß eine Umschalteinrichtung zur Anpassung der Bilddatenwortraten zwischen dem PAL-Decodierer und der Video-Verarbeitungs- oder Video-Übertragungseinrichtung bzw. von der Video-Verarbeitungs- oder Video-Übertragungseinrichtung und dem PAL-Codierer vorgesehen ist.

8. Anordnung nach einem der vorhergehenden Ansprüche 4 bis 7, dadurch gekennzeichnet, daß ein Phasenregelkreis (5) vorgesehen ist, der Speicherarbeitstakte mit verschiedenen Frequenzen liefert, wenn die Bilddatenwörter Luminanzdatenwörter und Chrominanzdatenwörter mit unterschiedlichen Datenwortraten enthalten.

9. Anordnung nach einem der vorhergehenden Ansprüche, dadurch gekennzeichnet, daß eine Speichertaktfrequenz von 18 MHz vorgesehen ist.

10. Anordnung nach einem der vorhergehenden Ansprüche, dadurch gekennzeichnet, daß als Video-Taktfrequenz 9 ; 10,125 ; 11,25 ; 13,5 und 18 MHz vorgesehen sind.

## Claims

1. A method of matching the image data word rate of a PAL-decoder (1) having a predetermined PAL clock frequency ($f_1$) to the video clock frequency ($f_2$) of a video-processing or video-transmission device (8), characterised in that the image data words (BW) emitted from the PAL-decoder (1) are input into an intermediate store (3) with the PAL clock frequency ($f_1$), that the image data words (BW) are read out, with a delay, at a store clock frequency ($f_{sp}$) which is higher than the PAL clock frequency ($f_1$) and which can readily be derived from the video clock frequency ($f_2$) and that the write and read operations are synchronised by the horizontal pulses (HI1) of the PAL-decoder (1) (Fig. 3).

2. A method of matching the video clock frequency ($f_2$) of the video-processing or video-transmission device (8) to the PAL clock frequency of a PAL-coder, characterised in that — possibly following the conversion of the image data word rate ($f_2$) — the image data words emitted from the video-processing or video-transmission device (8) are input into the intermediate store (3) with the store clock frequency ($f_{sp}$), that the image data words are read out at a PAL clock frequency ($f_1$) which is lower than the store clock frequency ($f_{sp}$) and that the write and read operations are synchronised by the horizontal pulses of the video-processing or video-transmission device (8).

3. A method as claimed in claim 1 or 2, characterised in that the matching of the image data word rate ($f_2$) of the video-processing or video-transmission device (8) to the store clock frequency ($f_{sp}$) is carried out by over-sampling of the image data words emitted from the intermediate store (3) or the video-processing/video-transmission device (8) followed by digital filtering and under-sampling.

4. An arrangement for carrying out the method claimed in one of the preceding claims, characterised in that an intermediate store (3) is provided, that a first store control unit (2) is provided which is supplied with the PAL clock frequency (f₁), that a second store control unit (4) is provided which is supplied with the store clock frequency ($f_{sp}$), that a phase regulated circuit (5) is provided and that the store control units (2, 4) and the phase regulated circuit (5) are supplied with the horizontal pulses.

5. An arrangement as claimed in claim 4, characterised in that when the video-processing or video-transmission device (8) is connected to the output of the PAL-decoder (1), the data output ($3_4$) of the intermediate store (3) is connected to a clock matching circuit (7) which includes an arrangement for over-sampling (71), a digital filter (72) and an arrangement for under-sampling (73), and that when the PAL-coder is connected to the output of the video-processing or video-transmission device (8), the clock matching circuit (7) is connected in series with the data input of the intermediate store (3).

6. An arrangement as claimed in claim 4 or 5, characterised in that the store consists of a FIFO-store.

7. An arrangement as claimed in one of the claims 5 to 7, characterised in that a switch-over device is provided for matching the image data word rates between the PAL-decoder and the video-processing or video-transmission device or from the video-processing or video-transmission device and the PAL-coder.

8. An arrangement as claimed in one of the preceding claims 4 to 7, characterised in that a phase regulated circuit (5) is provided which supplies store operating clock signals with different frequencies when the image data words contain luminance data words and chrominance data words with different data word rates.

9. An arrangement as claimed in one of the preceding claims, characterised in that a store clock frequency of 18 MHz is provided.

10. An arrangement as claimed in one of the preceding claims, characterised in that 9 ; 10.125 ; 11.25 ; 13.5 and 18 MHz are provided as a video-clock frequency.

## Revendications

1. Procédé pour adapter le taux des mots de données d'image d'un décodeur PAL (1) ayant une fréquence d'horloge PAL prédéterminée ($f_1$) à la fréquence d'horloge vidéo ($f_2$) d'un dispositif de traitement vidéo ou d'un dispositif de transmission vidéo (8), caractérisé par le fait que les mots de données d'image (BW), qui sont fournis par le décodeur PAL (1), sont inscrits dans une mémoire intermédiaire (3) avec la fréquence d'horloge PAL ($f_1$), que les mots de données d'image (BW) sont lus, avec retard, avec une fréquence d'horloge de mémoire ($f_{sp}$) qui peut facilement être déduite de la fréquence d'horloge vidéo ($f_2$) et qui est supérieure à la fréquence d'horloge PAL ($f_1$), et que les opérations d'inscription et de lecture sont synchronisées par les impulsions horizontales (HI1) du décodeur PAL (1) (Figure 3).

2. Procédé pour adapter la fréquence d'horloge vidéo ($f_2$) du dispositif de traitement vidéo ou du dispositif de transmission vidéo (8) à la fréquence d'horloge PAL d'un codeur PAL, caractérisé par le fait que les mots de données d'image qui sont fournis par le dispositif de traitement vidéo ou par le dispositif de transmission vidéo (8), sont inscrits dans la mémoire intermédiaire (3), éventuellement après conversion du taux de mots de données d'image ($f_2$) avec la fréquence d'horloge de la mémoire ($f_{sp}$), que les mots de données d'image sont lus avec une fréquence d'horloge PAL ($f_1$) qui est inférieure à la fréquence d'horloge de la mémoire ($f_{sp}$), et que les opérations d'inscription et de lecture sont synchronisées à l'aide des impulsions horizontales du dispositif de traitement vidéo ou du dispositif de transmission vidéo (8).

3. Procédé selon la revendication 1 ou 2, caractérisé par le fait que l'adaptation du taux de mots de données d'image ($f_2$) du dispositif de traitement vidéo ou du dispositif de transmission vidéo (8), à la fréquence d'horloge de la mémoire ($f_{sp}$) par accroissement du taux d'impulsion des mots de données d'image qui sont fournis par la mémoire intermédiaire (3) ou par le dispositif de traitement vidéo/dispositif de transmission vidéo (8) et par post-filtrage numérique ainsi que par l'abaissement du taux d'impulsion.

4. Dispositif pour la mise en œuvre du procédé selon l'une des revendications précédentes, caractérisé par le fait qu'il est prévu une mémoire intermédiaire (3), qu'il est prévu une première commande de mémoire (2) à laquelle est appliquée la fréquence d'horloge PAL ($f_1$), qu'il est prévu une seconde commande de mémoire (4), à laquelle est appliquée la fréquence d'horloge de mémoire ($f_{sp}$), qu'il est prévu un circuit de réglage de la phase (5), et qu'aux dispositifs de commande de mémoire (2, 4) et au circuit de réglage de la phase (5), sont appliquées les impulsions horizontales.

5. Dispositif selon la revendication 4, caractérisé par le fait que lors du branchement du dispositif de traitement ou de transmission vidéo (8) à la sortie du décodeur PAL (1), on branche à la sortie des données ($3_4$) de la mémoire intermédiaire (3), un circuit d'adaptation des signaux d'horloge (7), qui comporte un dispositif pour augmenter le taux d'impulsion (71), un filtre numérique (72) et un dispositif pour abaisser le taux d'impulsion (73), et que lors du branchement du codeur PAL à la sortie du dispositif de traitement ou de transmission vidéo (8), le circuit d'adaptation des signaux d'horloge (7), est branché en amont de l'entrée des données de la mémoire intermédiaire (3).

6. Dispositif selon la revendication 4 ou 5, caractérisé par le fait que la mémoire est une mémoire FIFO.

7. Dispositif selon l'une des revendications 5 et 6, caractérisé par le fait qu'il est prévu un dispositif de commutation pour adapter le taux des mots de données d'image entre le décodeur PAL et le dispositif de traitement ou de transmission vidéo et au codeur PAL.

8. Dispositif selon l'une des revendications précédentes 4 à 7, caractérisé par le fait qu'il est prévu un circuit de réglage de la phase (5) qui fournit des cadences de travail de la mémoire, à des fréquences différentes, lorsque les mots de données d'image comportent des mots de données de luminescence ou des mots de données de crominance avec des taux de mots de données différents.

9. Dispositif selon l'une des revendications précédentes, caractérisé par le fait qu'il est prévu une fréquence de cadence de mémoire de 18 MHz.

10. Dispositif selon l'une des revendications précédentes, caractérisé par le fait qu'il est prévu, comme fréquence de cadence vidéo 9 ; 10,125 ; 11,25 ; 13,5 et 18 MHz.

FIG 1

922

FIG 2

922

936

FIG 3

0 130 588